# EUROPÄISCHE PATENTSCHRIFT

(11) **EP 1 828 814 B1**
(45) Veröffentlichungstag und Bekanntmachung des Hinweises auf die Patenterteilung: **16.04.2014**
(21) Anmeldenummer: 05823070.7
(22) Anmeldetag: 19.12.2005
(51) Int. Cl.: C03C 17/00, C08K 5/00, C08K 5/56, G02B 1/04

(54) **OPTISCHE KOMPONENTE AUS EINEM ANORGANISCH-ORGANISCHEN HYBRIDMATERIAL ZUR HERSTELLUNG VON BRECHZAHLGRADIENTENSCHICHTEN MIT HOHER LATERALER AUFLÖSUNG, DEREN VERWENDUNG UND VERFAHREN ZU IHRER HERSTELLUNG**
OPTICAL COMPONENT MADE OF AN INORGANIC-ORGANIC-HYBRID MATERIAL FOR THE PRODUCTION OF REFRACTIVE INDEX GRADIENT LAYERS WITH HIGH LATERAL RESOLUTION, THEIR USE AND METHOD FOR THE PRODUCTION THEREOF
COMPOSANTS OPTIQUES CONSTITUES D'UNE MATIÈRE HYBRIDE INORGANIQUE-ORGANIQUE PERMETTANT DE PRODUIRE DES COUCHES A GRADIENT D'INDICE DE RÉFRACTION AVEC UNE RÉSOLUTION LATÉRALE PLUS ÉLEVÉE, LEUR UTILISATION ET PROCÈDE POUR LES PRODUIRE

(30) Priorität: 20.12.2004 DE 102004061323
(43) Veröffentlichungstag der Anmeldung: 05.09.2007
(73) Patentinhaber: EPG (Engineered nanoProducts Germany) AG, 64347 Griesheim (DE)
(72) Erfinder: MENNIG, Martin, 66287 Quierschied (DE); OLIVEIRA, Peter, William, 66111 Saarbrücken (DE)
(74) Vertreter: Meissner, Bolte & Partner
(86) Internationale Anmeldenummer: PCT/EP2005/013685
(87) Internationale Veröffentlichungsnummer: WO 2006/066858

(56) Entgegenhaltungen:
- EP-A- 1 408 352
- WO-A1-97/18791
- US-A- 5 258 024
- US-A- 5 858 526
- US-B1- 6 391 286
- US-B1- 6 639 039
- OLIVEIRA P W ET AL: "FABRICATION OF GRIN-LENSES BY CONTACTLESS ELECTROPHORETIC-GRADIENT FORMATION IN TRANSPARENT NANOCOMPOSITES" ORGANIC/INORGANIC HYBRID MATERIALS II. SAN FRANCISCO, CA, APRIL 5 - 9, 1999, MATERIALS RESEARCH SOCIETY SYMPOSIUM PROCEEDINGS. VOL. 576, WARRENDALE, PA : MRS, US, Bd. VOL. 576, 5. April 1999 (1999-04-05), Seiten 421-426, XP000897945 ISBN: 1-55899-483-1

## Beschreibung

Die vorliegende Erfindung betrifft optische Komponenten bzw. Bauteile mit Brechzahlgradienten, deren Verwendung und Verfahren zu deren Herstellung über anorganisch-organische Hybridmaterialien.

Es ist bekannt, dass die Diffusion von Monomeren mit gegenüber der umgebenden flüssigen Matrix erhöhtem oder auch erniedrigtem Brechungsindex für die Erzeugung eines Brechzahlgradienten genutzt werden kann, wie es z.B. in US 5,552,261 und US 5,529,473 beschrieben ist. Der bei Photopolymeren bekannte "Colburn-Haines-Effekt" zur gerichteten Diffusion mit anschließender Polymerisierung in den erwärmten bzw. belichteten Bereichen führt zu einer Erhöhung der Dichte und somit zu einer Erhöhung oder Erniedrigung des Brechwertes. Bei organischen Monomeren ist diese Änderung jedoch gering, da die sich einstellende Dichteänderung nur einen geringen Beitrag zur Molrefraktion liefert. Danach wird das Brechzahlgradientenprofil durch Nachvernetzung, beispielsweise über Photopolymerisation, fixiert.

Nachteile dieser Werkstoffe sind relativ niedrige Brechzahlhübe, lange Prozesszeiten und hohe Streuverluste. Aus WO 97/38333 ist bekannt, dass man Brechzahlgradienten auch über die Migration von Nanopartikeln mit hoher oder niedriger Brechzahl in einer flüssigen, photopolymerisierbaren Matrix (Sol) erzeugen und über eine nachträgliche Vernetzung (Polymerisation, Kondensation) fixieren kann. Der wesentliche Nachteil dieses Verfahrens besteht darin, dass man an eine flüssige Matrixphase gebunden ist. Daher ergeben sich Handhabungsprobleme bei der Anwendung von holographischen Techniken oder Maskenbelichtungstechniken.

Hinzu kommt, dass die Brechwertunterschiede in Polymeren auch über den Colburn-Haines-Effekt auf Grund der stofflichen Eigenschaften relativ gering sind. In anderen Arbeiten wird die Diffusion von Nanopartikeln in noch nicht vollständig verdichteten Polymermatrices unter Einfluss von gradientenbildenden Maßnahmen beschrieben, wie z.B. A. Zimmermann et al., Light-Management Films Based on Nanocomposite Coatings, Vortrag 5th Int. Conf. Coatings on Glass, Saarbrücken, 4. bis 8. Juli 2004. Dabei wird die Brechwertdifferenz durch Aufkonzentration von höherbrechenden anorganischen Nanopartikeln erreicht. Nachteil dieses Verfahrens ist, dass die Diffusionsgeschwindigkeit der Partikel im Vergleich zu organischen Monomeren um eine bis mehrere Größenordnungen kleiner ist, und der Prozess zwangsläufig die Anwesenheit von hydrolysierbaren oder hydrolysierten Silanen erfordert. Diese Silanen bedingen eine relativ hohe Feuchtempfindlichkeit der Materialien (z.B. C.J. Brinker, G.W. Scherer "Sol-Gel Science: The Physics and Chemistry of Sol-Gel-Processing, Academic Press 1990).

DE-A-10200648 beschreibt ein Verfahren zur Herstellung von holografischen Folien und Diffusorfolien, bei denen zur Erzeugung von holografischen Strukturen Nanopartikel in Verbindung mit hydrolisierbaren oder hydrolysierten Silanen unabdingbar sind. Diese Verbindungen und ihre Herstellung weisen jeweils die oben genannten Nachteile auf. Die Kondensation der Silane kann auch zu dreidimensionaler Vernetzung und damit zu einer Versprödung des Materials führen.

Der vorliegenden Erfindung lag daher die Aufgabe zugrunde, ein Material zu entwickeln, das in der Lage ist, einen ausreichend hohen Brechzahlgradienten durch Anlegen äußerer Felder bzw. Anwendung von Gradienten bildenden Maßnahmen aufzubauen, und die vorstehend genannten Nachteile nicht aufweist.

Es wurde nun überraschenderweise festgestellt, dass diese Aufgabe durch ein eine feste oder viskose Matrix bildendes Polymer, in dem bestimmte Metall-Komplexverbindungen dispergiert oder gelöst sind, erfolgen kann, ohne dass dazu Silane oder Nanopartikel benötigt werden.

Die Erfindung betrifft daher ein Verfahren zur Herstellung eines optischen Bauteils, dadurch gekennzeichnet, dass a) ein anorganisch-organisches Hybridmaterial, umfassend a) ein lösliches, organisches Polymer und b) einen ein- oder mehrkernigen Metallkomplex, der mindestens einen Liganden mit mindestens einer photochemisch oder thermisch polymerisierbaren funktionellen Gruppe aufweist, auf ein Substrat aufgetragen oder in oder auf ein Formwerkzeug gegeben wird, b) das Hybridmaterial gegebenenfalls getrocknet wird, damit es fest oder viskos wird, c) das feste oder viskose Hybridmaterial mustermäßig erwärmt oder bevorzugt mustermäßig bestrahlt wird, um einen Brechzahlgradienten in dem Hybridmaterial zu erzeugen, und d) das Hybridmaterial anschließend thermisch und/oder photochemisch unter Fixierung des Brechzahlgradienten vollständig gehärtet wird.

Das Hybridmaterial kann neben dem löslichen, organischen Polymer und dem Metallkomplex ferner Lösungsmittel, organische Monomere oder Oligomere, Weichmacher und/oder andere Additive enthalten.

Dementsprechend umfasst das anorganisch-organische Hybridmaterial, bezogen auf das Gesamttrockengewicht, bevorzugt:
a) 4,9 bis 95,9 Gew.-%, vorzugsweise 10 bis 80 Gew.-%, insbesondere 20 bis 40 Gew.-%, eines löslichen Polymers,
b) 0,5 bis 50 Gew.-% eines ein- oder mehrkernigen Metallkomplexes, der mindestens einen Liganden mit mindestens einer photochemisch oder thermisch polymerisierbaren funktionellen Gruppe aufweist,
c) 0 bis 50 Gew.-%, bevorzugt 0,1 bis 30 Gew.-%, bevorzugter 1 bis 20 Gew.-% eines handelsüblichen Weichmachers,
d) 0 bis 5 Gew.-%, vorzugsweise 0,01 bis 1 Gew.-%, eines oder mehrerer Additive, bevorzugt ausgewählt aus thermischen oder photochemischen Polymerisations- bzw. Vernetzungsinitiatoren, Sensibilisierungsmitteln, Netzhilfsmitteln, Adhäsionshilfsmitteln (Haftvermittlern), Antioxidationsmitteln, Verlaufsmitteln, Stabilisatoren, Farbstoffen, photochromen oder thermochromen Verbindungen, und
e) 0 bis 4,9 Gew.-% organischer Monomere und/oder 0 bis 50 Gew.% organischer Oligomere.

Das Gesamttrockengewicht bezieht sich auf das Gesamtgewicht des Hybridmaterials ohne Lösungsmittel. Bevorzugt machen die Komponenten a) bis e) 100 Gew.-% des Gesamttrockengewichts aus, d.h. das Hybridmaterial enthält bevorzugt neben diesen Komponenten und dem optionalen Lösungsmittel keine weiteren Komponenten. Es ist insbesondere bevorzugt, dass das Hybridmaterial keine hydrolysierbaren oder hydrolysierten Silane und auch keine Kondensationsprodukte davon (sowohl teilweise als auch vollständig kondensierte Silane) enthält. Es ist auch bevorzugt, dass dem Hybridmaterial keine Nanopartikel zugesetzt sind.

Als lösliche Polymere kommen alle herkömmlichen löslichen organischen Polymere in Frage, wobei auch Mischungen von löslichen Polymeren verwendet werden können. Bevorzugt sind solche Polymere, die in organischen Lösungsmitteln löslich sind, beispielsweise in Alkoholen, wie Ethanol, Isopropanol oder Butanol, Ketonen, wie Aceton, Estern wie Ethylacetat, Ethern wie Tetrahydrofuran und Glycolen, wie Ethylenglycol, oder in aliphatischen, aromatischen und halogenierten Kohlenwasserstoffen, wie Hexan, Benzol, Toluol und Chloroform. Beispiele für solche löslichen Polymere sind Acrylate, wie Polyacrylat, Polymethacrylat, Polyepoxid, Polyvinylalkohol, Polyvinylacetat, Polyvinylbutyral und Polyacrylamid. Als lösliche Polymere können z.B. Polymere verwendet werden, die in dem eingesetzten Lösungsmittel bei 20°C zu mindestens 20 g/l löslich sind.

Bei den erfindungsgemäß eingesetzten ein- oder mehrkernigen Metallkomplexen handelt es sich um Komplexe von Metallen mit einem oder mehreren Metallatomen als Zentralatom(e). Für den Komplex können alle Metalle eingesetzt werden, z.B. Metalle der zweiten bis sechsten, bevorzugt der zweiten bis fünften Hauptgruppe des Periodensystems der Elemente oder der ersten bis achten Nebengruppe des Periodensystems der Elemente bzw. der Übergangsmetalle, einschließlich der Lanthanoiden und Actinoiden. Bevorzugt sind Zn, Ti, Zr, Ce, Sn, La, Fe, Ta, Hf, Nb, Al, Cu, V, M, W, Ag und Cu, wobei Ti, Zr, Ta und Nb besonders bevorzugt sind. Halbmetalle wie Si, B oder As sind keine Metalle.

Die Komplexe können neben dem oder den Liganden, die die photochemisch oder thermisch polymerisierbare Gruppe enthalten, bevorzugt weitere übliche Gruppen als Komplexliganden enthalten. Diese Komplexliganden sind dem Fachmann bekannt. Beispiele für solche weiteren Liganden sind Alkoxide, bevorzugt C₁₋₆-Alkoxide, Phenoxy, Halogenide (F, Cl, Br, I), Oxo und Amin. Beispiele für organische Liganden sind Carbonsäuren, ß-Diketone, wie Acetessigester oder Acetylacetonate, CH-acide Verbindungen, Chelatliganden, die z.B. ein oder mehrere Amino-, Oxo- und/oder Hydroxygruppen aufweisen, wie EDTA oder Ethylendiamin, Aminosäuren, Peptide und Proteine oder korrespondierende Basen dieser Verbindungen. Die korrespondierende Base von Carbonsäure ist z.B. eine Carboxylatverbindung, wie das Acetatanion. Weitere Beispiele für Liganden sind z.B. in Holleman, Wiberg, Lehrbuch der Anorganischen Chemie, Bd. 91.-100, deGruyter, 1985, S. 970 aufgeführt.

Bei dem Liganden, der die thermisch oder photochemisch polymerisierbare funktionelle Gruppe enthält, kann es sich um einen organischen Liganden handeln, insbesondere einen der vorstehend genannten Beispiele für organische Liganden, der zusätzlich mindestens eine photochemisch oder thermisch polymerisierbare funktionelle Gruppe enthält. Diese Liganden sind gewöhnlich bifunktionelle Verbindungen mit funktioneller Gruppe zur Anbindung an das Metall und der polymerisierbaren Gruppe. Bei den polymerisierbaren Gruppen handelt sich um reaktive Gruppen, die mit sich selbst oder mit anderen Gruppen Verknüpfungsreaktionen eingehen können, die photochemisch oder thermisch initiiert werden können. Polymerisation bzw. polymerisierbar schließt hier auch Polykondensation bzw. polykondensierbar und Polyaddition bzw. polyaddierbar ein und umfasst auch Vernetzungs- bzw. Härtungsreaktionen. Die polymerisierbaren Gruppen sind dem Fachmann bekannt.

Beispiele für polymerisierbare Gruppen sind C=C-Doppelbindungen, OH-Gruppen, Epoxy-Gruppen, Aminogruppen oder andere Gruppen, die chemisch miteinander verknüpfbar sind, wobei die Bildung dieser Verknüpfung photochemisch oder thermisch initiiert werden kann. Es kann sich dabei auch um die Verknüpfung unterschiedlicher Gruppen miteinander handeln. In diesem Fall werden als Metallkomplex jeweils Komplexe mit den unterschiedlichen Gruppen verwendet, um die Verknüpfung zu gewährleisten. Bevorzugt werden photochemisch oder thermisch polymerisierbare Gruppen, die über eine (Meth)acryl-, Allyl-, Vinyl- oder Epoxygruppe verfügen, wobei (Meth)acryl- und Epoxygruppen besonders bevorzugt werden. Ebenso kommen Aminogruppen als thermisch oder photochemisch polymerisierbare Gruppe in Frage, die Kondensationen z. B. mit Epoxidgruppen, OH-Gruppen oder Säurechloriden eingehen können. Besonders bevorzugt werden dabei primäre Monoaminogruppen. Bevorzugt sind photochemisch polymerisierbare Gruppen.

Als Ligand, der keine polymerisierbare Gruppe enthält, ist Alkoxid bevorzugt. Die Metallkomplexe werden daher bevorzugt aus der Umsetzung von üblichen Metallalkoxiden mit dem Liganden, der die photochemisch oder thermisch polymerisierbare funktionelle Gruppe enthält, und gegebenenfalls weiteren Liganden erhalten. Die Metallkomplexe können vorzugsweise durch weitere Reaktion Chalcogenide, Sulfide, Halogenide oder Metalle bilden. Beispielsweise können die Metallkomplexe durch Hydrolyse oder Acidolyse zu Chalkogeniden oder Halogeniden umgesetzt werden. Die Metallkomplexe sind bevorzugt Komplexe mit Liganden mit Doppelbindungen oder anderen photochemisch oder thermisch vernetzbare organische Gruppen, die über bekannte Kupplungsgruppen (z. B. Komplexbindungen bildende Gruppen) an die Zentralatome des komplexbildenden Metalls angekoppelt sind und die keine Silane enthalten.

Als Weichmacher kommen prinzipiell alle handelsüblichen Verbindungen in Betracht, z. B nach DIN 55945 (Dezember 1988). Bevorzugt sind Weichmacher ausgewählt aus der Gruppe der acyclischen aliphatischen Dicarbonsäureester, z.B. Ester der Adipinsäure, wie Di-n-octyladipat, Bis-(2-ethylhexyl)adipat, Diisodecyladipat, Dibutylsebacat, Dioctylsebacat und Bis-(2-ethylhexyl)sebacat; Ester von C₆-C₁₂-Dicarbonsäuren mit Polyalkylenglykolen, z.B. Triethylenglykol-bis-(n-heptanoat), Triethylenglykol-bis-(2-ethylhexanoat), Triethylenglykol-bis-(isononanoat); Ester von C₆-C₁₂-Carbonsäuren mit Polyalkylenglykolen, z.B. Triethylenglykol-bis-(2-ethylbutyrat); Diester aus (Meth)acrylsäure und Polyalkylenglykolen, wie Polypropylenglykoldiacrylat oder -dimethacrylat, Polyethylenglykoldiacrylat oder -dimethacrylat, beispielsweise Tetraethylenglykoldi(meth)acrylat.

Ferner kann das Hybridmaterial weitere Additive enthalten (Komponente d)), bevorzugt ausgewählt aus thermischen oder photochemischen Vernetzungsinitiatoren, Sensibilisierungsmitteln, Netzhilfsmitteln, Adhäsionshilfsmitteln bzw. Haftvermittlern, Antioxidationsmitteln, Verlaufsmitteln, Stabilisatoren, Farbstoffen, photochromen und thermochromen Verbindungen oder einer Kombination davon.

Das Hybridmaterial enthält zweckmäßigerweise einen Polymerisationskatalysator (einschließlich Polyadditions- und/oder Polykondensationskatalysatoren), der die Vernetzung und Härtung thermisch und/oder photochemisch induzieren kann ("Polymerisations- oder Vernetzungsinitiator"). Als Photoinitiatoren können z.B. die im Handel erhältlichen Starter eingesetzt werden. Beispiele hierfür sind Irgacure^{®}184 (1-Hydroxycyclohexylphenylketon), Irgacure^{®} 500 (1-Hydroxycyclohexylphenylketon, Benzophenon) und andere Photoinitiatoren vom Irgacure^{®}-Typ; Darocur^{®} 1173, 1116, 1398, 1174, 1020, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzyldimethylketal, 1,1,1-Trichloracetophenon, Diethoxyacetophenon und Dibenzosuberon. Es können auch Photoinitiatoren und dazu passende Sensibilisierungsmittel verwendet werden, die z.B. durch sichtbares Licht angeregt werden.

Als thermische Initiatoren kommen vorzugsweise organische Peroxide in Form von Diacylperoxiden, Peroxydicarbonaten, Alkylperestern, Dialkylperoxiden, Perketalen, Ketonperoxiden und Alkylhydroperoxiden in Frage. Beispiele für derartige thermische Initiatoren sind Dibenzoylperoxid, tert.-Butylperbenzoat und Azobisisobutyronitril. Ein Beispiel für einen kationischen Thermostarter ist 1-Methylimidazol. Beispiele für Verlaufsmittel sind polyethermodifizierte Dimethylpolysiloxane, wie z.B. Byk 306^{®}. Beispiele für Sensibilisierungsmittel sind aminmodifizierte Oligoetheracrylate, wie z.B. Grodamere^{®}.

Als organische Monomere und/oder Oligomere werden insbesondere solche verwendet, die im verwendeten Lösungsmittel löslich sind. Als Monomere oder Oligomere kommen bevorzugt alle organischen Verbindungen in Frage, die die unter b) genannten polymerisierbaren bzw. vernetzbaren funktionellen Gruppen tragen. Bevorzugt werden Monomere und/oder Oligomere mit fotochemisch polymerisierbaren bzw. vernetzbaren Gruppen eingesetzt. Diese können mit Hilfe der bei Komponente d) genannten photochemischen oder thermischen Initiatoren polymerisiert bzw. vernetzt werden. Die Menge beträgt, bezogen auf das Gesamttrockengewicht, z.B. 0 bis 54,9 Gew.-% organische Monomere und/oder Oligomere, wobei 0 bis 4,9 Gew.-% Monomere und/oder 0 bis 50 Gew.-% Oligomere bevorzugt sind.

Bevorzugte Beispiele für diese Monomere und/oder Oligomere sind Acrylate, vorzugsweise Methylmethacrylate. Es können aber auch z.B. Diacrylate verwendet werden, wie z. B. Dioldiacrylate oder Dioldimethacrylate, Hexandioldimethacrylat, Hexandioldiacrylat, Dodecandioldiacrylat oder Dodecandioldimethacrylat.

Zur Herstellung des Hybridmaterials wird in der Regel ein Lösungsmittel verwendet. Die Menge des verwendeten Lösungsmittels im Hybridmaterial hängt von der beabsichtigten Verwendung ab. Auf diese Weise dient das Hybridmaterial als Beschichtungszusammensetzung oder Formmasse. Als Lösungsmittel kommen alle üblichen Lösungsmittel in Betracht, mit denen die löslichen Polymere gelöst werden können. Bevorzugt sind organische Lösungsmittel und Wasser. Es können auch Mischungen von Lösungsmitteln eingesetzt werden. Beispiele für organische Lösungsmittel sind Alkohole, wie Ethanol, Isopropanol oder Butanol, Ketone, wie Aceton, Ester wie Ethylacetat, Ether wie Tetrahydrofuran und Glycole, wie Ethylenglycol, aliphatische, aromatische und halogenierte Kohlenwasserstoffe, wie Hexan, Benzol, Toluol und Chloroform.

Das Hybridmaterial ist ein Matrix bildendes Material und eignet sich hervorragend für die Herstellung von Formkörpern oder Beschichtungen mit einem Brechzahlgradienten. Dementsprechend beinhaltet die Erfindung Verfahren zur Herstellung solcher Schichten und Formkörper mit Brechzahlgradienten und die daraus erhaltenen Gegenstände. Im folgenden wird das Verfahren anhand von Beschichtungen beschrieben. Für die Herstellung von Formkörpern gilt das gleiche entsprechend, wobei Formteile ansonsten nach den üblichen Formverfahren gebildet werden können, z.B. durch Einbringen in oder Auftragen auf ein Formwerkzeug und Entnahme aus bzw. von dem Formwerkzeug nach Härtung. Die geeigneten Verfahren schließen auch Foliengießen ein.

In einer besonders bevorzugten Ausführungsform wird ein Substrat, bevorzugt eine Trägerfolie, z.B. aus Kunststoff, mit dem Hybridmaterial wie nachstehend erläutert beschichtet und nach Härtung wird die gebildete Beschichtung von dem Substrat abgelöst (delaminiert), wobei eine selbsttragende Folie oder Platte als optische Komponente mit Brechzahlgradient erhalten wird.

Das Verfahren zur Herstellung von Schichten mit Brechzahlgradienten beinhaltet das Auftragen von Hybridmaterial auf ein Substrat. Es kann jedes geeignete Substrat verwendet werden, bevorzugt Glas- oder Kunststoffsubstrate, wie Kunststoffplatten oder Polymerfolien. Das Substrat ist bevorzugt transparent. Zur Herstellung eines Materials mit Brechzahlgradient wird das polymerisierbare Hybridmaterial bevorzugt auf ein transparentes Substrat, vorzugsweise auf transparente Kunststofffolien, insbesondere PET, PE, PP, TAC oder PC, aufgetragen.

Die Beschichtung mit dem Hybridmaterial kann nach üblichen Methoden erfolgen, z.B. durch Tauchen, Fluten, Rakeln, Gießen, Schleudern, Spritzen, Aufstreichen, Slot-Coating, Meniskus-Beschichten, Foliengießen, Walzenauftrag, Drucken, z. B. Flexoprint, oder Sprühen. Die jeweils erforderliche Viskosität kann durch die Menge des verwendeten Lösungsmittels, die Art des Polymers oder gegebenenfalls durch Menge und Art des Monomers und/oder Oligomers eingestellt werden. Bevorzugte Schichtdicken (im getrockneten bzw. ausgehärteten Zustand) liegen zwischen 1 bis 100 µm.

Die Brechzahlgradienten werden erzeugt durch einen Konzentrationsgradienten des in dem Hybridmaterial enthaltenen anorganischen Materials in dem Hybridmaterial, das durch Zonen hochbrechender, anorganisch angereicherter Materialien hervorgerufen wird. Der Konzentrationsgradient und damit der Brechzahlgradient kann durch eine beliebige Gradienten bildende Maßnahme erzeugt werden. Bevorzugt erfolgt die Gradienten bildende Maßnahme an einem Hybridmaterial, das fest oder viskos ist. Das Hybridmaterial kann für die Gradienten bildenden Maßnahme z.B. eine Viskosität bei 25°C von 2 bis 3.500 Pas, bevorzugt 500 bis 2.000 Pas aufweisen. Dies kann z.B. durch teilweises oder vollständiges Entfernen des Lösungsmittels eingestellt werden.

Durch die Gradienten bildende Maßnahe wird eine Potentialdifferenz als treibende Kraft zur gerichteten Diffusion der polymerisierbaren Metallkomplexe über Unterschiede im chemischen Potential (in der Konzentration von chemischen Stoffen oder chemischen Gruppen), beispielsweise analog dem vorstehend beschriebenen Colburn-Haines-Effekt, erzeugt.

Die Gradienten bildende Maßnahme ist insbesondere eine lokale bzw. mustermäßige Bestrahlung oder Erwärmung der Hybridschicht, um gezielt an lokalen Stellen photochemisch oder thermisch eine Polymerisation auszulösen, die zur Ausbildung des Konzentrationsgradienten führt. Bevorzugt wird Holographie, z.B Zweiwellenmischen, Lithographie oder lokale Bestrahlung bzw. Belichtung als Gradienten bildende Maßnahme eingesetzt. Bevorzugt werden Laserlicht, UV-Licht oder sichtbares Licht verwendet. Die mustermäßige Bestrahlung kann gegebenenfalls bei einer erhöhten Temperatur von 30 bis 90°C und bevorzugt 50 bis 70°C ausgeführt werden.

Unter dem Einfluss der Gradienten bildenden Maßnahmen, beispielsweise einer lokalen Belichtung und in Anwesenheit eines Vernetzungsinitiators, vernetzen bzw. polymerisieren die frei diffundierenden Metallkomplexe über die Verknüpfung der polymerisierbaren bzw. vernetzbaren Liganden und bilden damit lokale Zonen mit höheren Brechwerten. Dabei können auch neue anorganische Bindungen geknüpft werden, wie zum Beispiel oxidische, sulfidische oder metallische, die ebenfalls zur Brechwerterhöhung beitragen können. Auf diese Weise wird der Konzentrationsgradient erzeugt.

Bevorzugt sind ein Beschichtungsmaterial aus dem Hybridmaterial, das auf transparenten Kunststofffolien aufgetragen wird und in dem z.B. über Holographie, Lithographie oder durch lokale Belichtung optische Strukturen mit Brechzahlgradienten erzeugt werden können, und ein Verfahren zur Herstellung einer Folie, bei dem man das erfindungsgemäße Hybridmaterial mit nasschemischen Verfahren auf eine transparente Kunststofffolie aufträgt und das Lösungsmittel durch Trocknen weitgehend entfernt, beispielsweise auf einen Restanteil von 0 bis 20 Gew.-%, insbesondere 0 bis 10 Gew.-%, bezogen auf das Gesamtgewicht des Hybridmaterials. In dieser Form oder delaminiert vom Substrat kann die Folie aufgewickelt gelagert werden. Zur Vermeidung von unerwünschten Nachreaktionen wird die Folie, wie bei lichtempfindlichen Materialien üblich, lichtgeschützt verpackt und klimatisiert (15 bis 30°C).

Durch mustermäßige Bestrahlung, wie durch Holographie, Lithographie oder lokale Belichtung, wird wie beschrieben ein Brechzahlgradient in der Hybridschicht erzeugt. Durch den durch die thermische Diffusion hervorgerufenen Transportprozess der vernetzbare Bindungen tragenden Komplexmoleküle gelangen diese in den Bereich der lokalen Belichtung und vernetzen an dieser Stelle untereinander oder mit vernetzbaren Matrixkomponenten. In Folge der durch die Zusammensetzung bedingten höherbrechenden anorganischen Anteile bilden die Komponenten an der belichteten Stelle Zonen mit höherem Brechwert. Im Gegensatz dazu verbleiben an den unbelichteten Nachbarregionen Zonen mit niedrigerem Brechwert. Aus dieser Nachbarregion diffundieren weitere Komplexmoleküle in die belichtete Region. Dieser Prozess mit der gerichteten Diffusion erfolgt während der Belichtung und dauert in der Regel etwa zwischen einer bis wenigen Sekunden und wenigen Minuten, je nach Belichtungsbedingungen und Temperatur. Durch den Brechzahlunterschied zwischen den Zonen mit höherem und niedrigerem Brechwert entsteht ein lokaler Brechzahlgradient.

Überraschenderweise erfolgt die Migration der verknüpfbaren bzw. polymerisierbaren/vernetzbaren Komplexe in dem Hybridmaterial auch wenn das Hybridmaterial bzw. die Matrix fest oder viskos ist.

Im Anschluss an diesen Prozess erfolgt die vollständige Vernetzung des Hybridmaterials (der Matrix), das noch Komponenten mit noch nicht vernetzten Gruppen enthält, bevorzugt durch flächenmäßige Photopolymerisation und/oder durch thermisch initiierte Polymerisation unter Fixierung des gebildeten Gradienten. Dabei wird noch eventuell vorhandenes Restlösungsmittel entfernt (Stabilisierung der Schicht). Bevorzugt ist die Bestrahlung mit UV-Licht oder sichtbarem Licht zur vollständigen Härtung des Hybridmaterials unter Fixierung des Gradienten.

Die beschriebene Stabilisierung der den Brechwertgradienten enthaltenden Schicht erfolgt bevorzugt über flächige Belichtung, wobei die nicht in die Zonen höheren Brechwertes eindiffundierten polymerisierbaren Gruppen sich untereinander vernetzen, sodass die gesamte Schichtfläche stabilisiert wird. Dabei konvertieren die Doppelbindungen oder anderweitigen polymerisierbaren Gruppen zu den entsprechenden Einfachbindungen.

Der Konversionsgrad gibt dabei das Ausmaß der Polymerisationsreaktion der in den Komplexliganden oder in der Matrix (organische Komponenten) vorhandenen, reaktiven Gruppen, z. B. C=C-Doppelbindungen oder Epoxygruppen, an. Ein organischer Konversionsgrad von beispielsweise 95 % bedeutet, dass 95 % aller C=C-Doppelbindungen oder Epoxygruppen umgesetzt sind. Für die Bestimmung des Konversionsgrades gibt es in der Fachliteratur verschiedene Messmethoden, z. B. Infrarot-Messmethoden. Die Polymerisation kann mit Hilfe üblicher Initiatoren, thermisch oder durch UV-Licht, gestartet werden. Solche Initiatoren sind vorstehend genannt.

Die nach dem erfindungsgemäßen Verfahren hergestellten beschichteten Substrate und Formkörper mit Brechzahlgradienten können für transparenten oder transluzente Schichten mit Brechzahlgradienten, insbesondere für holographisch und fotolithografisch hergestellte Gradientenindexlinsen, holographische Bilder, Lichtlenkkomponenten und Komponenten in der abbildenden Optik verwendet werden.

Das erfindungsgemäße Brechzahlgradientenmaterial kann beispielsweise zur Herstellung von passiven Lichtleiter-Elementen für Displays und Beleuchtungselemente, optische Datenspeicher, für Sicherheitshologramme, Bildhologramme, digitale Hologramme zur Informationsspeicherung, für Systeme mit Komponenten, die Lichtwellenfronten verarbeiten, für Anwendungen als planare Wellenleiter (Lichtwellenleiter), für Anwendungen zur Polarisationsbeeinflussung von Licht, für Anwendungen als Strahlteiler und als Linse verwendet werden.

In den nachfolgenden Beispielen wird als Maß für die erreichte Brechwertmodulation die Beugungseffizienz oder auch das sogenannte "Gainprofil" gemessen. Hierbei wird die direkte Transmission (transmittance) eines auf einem Substrat aufgetragenen Hybridmaterials nach Migration der vernetzbaren höherbrechenden Komponenten und vollständiger Aushärtung der Matrix (Einfrieren des Brechzahlgradienten) bei einem Neigungswinkel zwischen -30° und +30° zur optischen Achse mit einem Hazemeter vermessen.

### Beispiele

### Beispiel 1 Herstellung Photohybrid (PH) für die Holographie (Referenz)

### Herstellung Zr-Komplex (Zr/Methacrylsäure-Komplex; Zr/MAS)

Es wurden 187,2 g (0,40 Mol) Zr(OPr)₄ (82 % in Butanol) in einem 500 ml Dreihalskolben vorgelegt und im Eisbad gekühlt. Dazu wurden unter Rühren langsam 34,44 g (0,40 Mol) Methacrylsäure hinzugegeben. Anschließend wurde das Reaktionsgemisch auf 25 °C erwärmt und für 15 Minuten gerührt.

### Herstellung Polymerlösung

Zu 1000 g Butylacetat gab man 250 g PVAc-Pellets und rührte 16 h bei 80 °C. Nach Zugabe von 100 g Ebecryl^{®} 150 (Methacrylat-modifiziertes Bisphenol A) rührte man weitere 10 min bei 25 °C, bis das Reaktionsgemisch klar wurde. Anschließend wurden 150 g Ultramol M^{®} (Adipinsäureester-Derivate) hinzugegeben und 20 min bei 25 °C gerührt.

### Herstellung Beschichtungslösung

Danach gab man 22,27 g des hergestellten Zr/MAS unter Rühren langsam zur Polymerlösung. Nach vollständiger Zugabe rührte man 10 min lang bei 25 °C. Nach dem Rühren wurde 1 Gew.-% (bezogen auf den Feststoff) an Photostarter (Irgacure 2020^{®})zugegeben.

### Beispiel 2 (Referenz)

### Herstellung Ti-Komplex (Ti/Diketonat-Komplex)

In einem 250 ml Dreihalskolben wurden 68 g (0,20 Mol) Tetrabutylorthotitanat (98 Gew.-% in Butanol, Ti) vorgelegt und im Eisbad gekühlt. Dazu tropfte man langsam (15 min) unter Rühren 48,24 g (0,20 Mol) Acetoacetoxyethylmethacrylat (AAEM). Nach vollständiger Zugabe wurde das Reaktionsgemisch nach 30 min aus dem Eisbad entfernt und anschließend bei 25 °C gerührt.

### Herstellung der Beschichtungslösung

Zur Polymerlösung, wie in Beispiel 1, fügte man 17 g Ti/AAEM unter Rühren langsam zu. Nach vollständiger Zugabe rührte man 10 min lang bei 25 °C. Nach dem Rühren wurde 1 Gew.-%/Feststoff des Photostarters H-Nu470x zugegeben.

### Beispiel 3 (Referenz)

### Herstellung Ta-Komplex (Ta/Diketonat-Komplex)

In einem 250 ml Dreihalskolben wurden 90,28 g (0,20 Mol) Tantalethoxid (90 Gew.-% in Ethanol, Ta) vorgelegt und im Eisbad gekühlt. Dazu tropfte man unter Rühren langsam (15 min) 48,24 g (0,20 Mol) Acetoacetoxyethylmethacrylat (AAEM) hinzu. Nach vollständiger Zugabe wurde das Reaktionsgemisch nach 30 min aus dem Eisbad entfernt und anschließend bei 25 °C gerührt.

### Herstellung Beschichtungslösung

Zur Polymerlösung, wie in Beispiel 1, fügte man 20,31 g Ta/AAEM unter Rühren langsam zu. Nach vollständiger Zugabe rührte man weitere 10 min lang bei 25 °C. Nach dem Rühren wurde 1 Gew.-% (bezogen auf den Feststoff) an Photostarter Irgacure 651^{®} zugegeben.

### Beispiel 4 (Referenz)

### Herstellung PH-Schicht auf Kunststofffolie

Auf eine transparente PET-Kunststofffolie wurde eine Schicht von 100 µm Dicke durch das Rakel-Verfahren aufgetragen. Die Schicht wurde bei 120 °C getrocknet. Die Trockenschichtdicke beträgt 50 µm.

### Beispiel 5 (Referenz)

### Herstellung PH-Schicht auf Glas

Die Beschichtungslösung wurde auf ein 10 cm x 10 cm großes Flachglassubstrat gerakelt und bei 120 °C für 15 min in einem Umlufttrockenschrank getrocknet. Danach betrug die Schichtdicke ca. 50 µm. Anschließend wurde die Schicht mit einer transparenten PET-Kunststofffolie abgedeckt.

### Beispiel 6

### Herstellung von Interferenzgittern bei λ = 315 nm

Mittels Zwei-Wellen-Mischen werden phasenmodulierte Volumenhologramme sowohl als Transmissions- als auch als Reflexionshologramme erzeugt. Als kohärente Lichtquelle wird ein Argon-Ionen-Laser verwendet. Der Laserstrahl (14 mW/cm²) wird auf einen Durchmesser von ca. 0.5 mm fokussiert und durch einen Strahlteiler in zwei Teilstrahlen gleicher Intensität geteilt. Die Interferenz dieser beiden Strahlen führt zu einer räumlich periodischen Änderung der Lichtintensität. Zur Schichtherstellung wurde das Photohybrid aus Beispiel 1 auf ein Glassubstrat (10 cm x 10 cm) entsprechend Beispiel 5 aufgetragen und der interferierende Laserstrahl auf das Photohybrid gerichtet. Es baut sich eine Gitterstruktur auf, die die gleiche Periodizität besitzt wie die durch das Zweiwellenmischen erzeugten Intensitätsmodulationen. Das Brechwertprofil wurde photochemisch durch das flächige Nachbelichten des Photohybrids fixiert, indem einer der im Experiment verwendeten Schreibstrahlen abgeschirmt und der verbleibende Strahl zu einer Nachpolymerisation verwendet wurde. Auf diese Weise werden Volumenhologramme mit Beugungseffizienzen von 65 % (bei 633 nm) erzeugt.

### Beispiel 7

### Herstellung von Interferenzgittern bei λ = 488 nm

Das Zweiwellenmischexperiment wurde wie in Beispiel 4 durchgeführt. Als kohärente Lichtquelle diente ein Argon-Ionen-Laser mit 65 mW/cm², welcher auf 488 nm kalibriert ist. Als holographisches Material diente das Photohybrid gemäß Beispiel 2. Zur Schichtherstellung wurde das Photohybrid auf ein Glassubstrat entsprechend Beispiel 5 aufgetragen. Die Belichtung und Fixierung erfolgten analog Beispiel 6. Auf diese Weise wurden Volumenhologramme mit Beugungseffizienzen von 45% (bei 633 nm) erzeugt.

### Beispiel 8

### Herstellung von Interferenzgittern bei λ=244 nm

Das Zweiwellenmischexperiment wurde wie in Beispiel 4 durchgeführt. Als kohärente Lichtquelle diente ein Argon-Ionen-Laser mit 65 mW/cm² (bei 488 nm) und ein Laser-Frequenzverdoppler (Ausgangsintensität = 10 mW/cm²). Als holographisches Material diente das Photohybrid von Beispiel 3. Zur Schichtherstellung wurde das Photohybrid auf ein Glassubstrat entsprechend Beispiel 5 aufgetragen. Die Belichtung und Fixierung erfolgten analog zu Beispiel 6. Auf diese Weise wurden Volumenhologramme mit Beugungseffizienzen von 82 % (bei 633 nm) erzeugt.

### Beispiel 9

### Herstellung eines Diffusors durch Kontaktlithographie

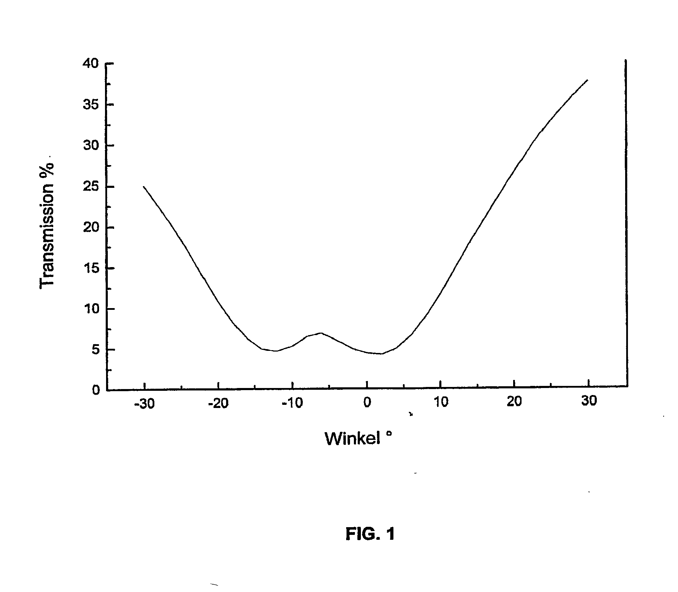

Hierzu wird die Beschichtungslösung aus Beispiel 1 auf Kunststofffolie gemäß Beispiel 4 laminiert und mit einer stochastischen Mikrolochmaske (integrale optische Dichte 0,55) im harten Kontakt abgedeckt. Diese Sandwich-Anordnung wurde mit parallelem UV-Licht (Hg-Hochdrucklampe, Leistung 500 W) bei 60 °C für 3 min unter einem Winkel von 5° bestrahlt. Die Fixierung des erzeugten BrechungsindexGradienten erfolgt durch fünfminütige Belichtung der Rückseite mit homogenem und nicht parallelem UV-Licht (1200 W). Anschließend wurde die Maske entfernt. Das erhaltene Gainprofil ist in Fig. 1 gezeigt. Man erkennt das Profil eines asymmetrischen Diffusors mit einem lokalen Transmissionsmaximum bei 5°.

## Patentansprüche

1. Verfahren zur Herstellung eines optischen Bauteils, **dadurch gekennzeichnet, dass**
a) ein anorganisch-organisches Hybridmaterial, umfassend a) ein lösliches, organisches Polymer und b) einen ein- oder mehrkernigen Metallkomplex, der mindestens einen Liganden mit mindestens einer photochemisch oder thermisch polymerisierbaren funktionellen Gruppe aufweist, auf ein Substrat aufgetragen oder in oder auf ein Formwerkzeug gegeben wird,
b) das Hybridmaterial getrocknet wird, damit es fest oder viskos wird,
c) das feste oder viskose Hybridmaterial mustermäßig bestrahlt oder erwärmt wird, um einen Brechzahlgradienten in dem Hybridmaterial zu erzeugen, und
d) das Hybridmaterial thermisch und/oder photochemisch unter Fixierung des Brechzahlgradienten vollständig gehärtet wird.

2. Verfahren nach Anspruch 1, wobei das anorganisch-organische Hybridmaterial mindestens eine Komponente ausgewählt aus Lösungsmitteln, organischen Monomeren oder Oligomeren, Weichmachern und anderen Additiven umfasst.

3. Verfahren nach Anspruch 1 oder Anspruch 2, **dadurch gekennzeichnet, dass** das anorganisch-organische Hybridmaterial, bezogen auf das Gesamttrockengewicht,
a) 4,9 bis 95,9 Gew.-% eines löslichen, organischen Polymers,
b) 0,5 bis 50 Gew.-% eines ein- oder mehrkernigen Metallkomplexes, der mindestens einen Liganden mit mindestens einer photochemisch oder thermisch polymerisierbaren funktionellen Gruppe aufweist,
c) 0 bis 50 Gew.-% eines Weichmachers,
d) 0 bis 5 Gew.-% eines Additivs ausgewählt aus thermischen oder photochemischen Polymerisations- bzw. Vernetzungsinitiatoren, Sensibilisierungsmitteln, Netzhilfsmitteln, Adhäsionshilfsmitteln, Antioxidationsmitteln, Verlaufsmitteln, Stabilisatoren, Farbstoffen, photochromen und thermochromen Verbindungen und
e) 0 bis 4,9 Gew.-% organischer Monomere und/oder 0 bis 50 Gew.-% organischer Oligomere
umfasst.

4. Verfahren nach einem der Ansprüche 1 bis 3, **dadurch gekennzeichnet, dass** das anorganisch-organische Hybridmaterial fest oder viskos ist.

5. Verfahren nach einem der Ansprüche 3 und 4, **dadurch gekennzeichnet, dass** die Komponente e) ein Acrylat, bevorzugt ein Methylmethacrylat, Dioldiacrylat oder Dioldimethacrylat, und/oder ein Oligomer davon ist.

6. Verfahren nach einem der Ansprüche 1 bis 5, **dadurch gekennzeichnet, dass** das lösliche Polymer ein Polyacrylat, Polymethacrylat, Polyepoxid, Polyvinylalkohol, Polyvinylacetat, Polyvinylbutyral oder Polyacrylamid ist.

7. Verfahren nach einem der Ansprüche 1 bis 6, **dadurch gekennzeichnet, dass** der ein- oder mehrkernige Metallkomplex mindestens eine Alkoxidgruppe an dem oder den Metallzentralatomen aufweist.

8. Verfahren nach einem der Ansprüche 1 bis 7, **dadurch gekennzeichnet, dass** der Ligand mit mindestens einer photochemisch oder thermisch polymerisierbaren funktionellen Gruppe des ein- oder mehrkernigen Metallkomplexes aus Carbonsäuren, ß-Diketonen, CH-aciden Verbindungen, Chelatliganden, Aminosäuren, Peptiden und Proteinen oder korrespondierenden Basen davon ausgewählt ist, die jeweils mindestens eine photochemisch oder thermisch polymerisierbare Gruppe enthalten.

9. Verfahren nach einem der Ansprüche 1 bis 8, **dadurch gekennzeichnet, dass** die photochemisch oder thermisch polymerisierbare funktionelle Gruppe eine C=C-Doppelbindung, Hydroxy, Epoxy oder Amino ist.

10. Verfahren nach einem der Ansprüche 1 bis 9, **dadurch gekennzeichnet, dass** das Hybridmaterial, bezogen auf das Gesamttrockengewicht, 10 bis 80 Gew.- %, bevorzugt 20 bis 40 Gew.-%, lösliches Polymer umfasst.

11. Verfahren nach einem der Ansprüche 1 bis 10, **dadurch gekennzeichnet, dass** der Ligand mindestens eine photochemisch polymerisierbare funktionelle Gruppe aufweist.

12. Verfahren nach einem der Ansprüche 1 bis 11, **dadurch gekennzeichnet, dass** das Hybridmaterial, bezogen auf das Gesamttrockengewicht, 0,1 bis 30 Gew.- % und bevorzugt 1 bis 20 Gew.-% eines Weichmachers umfasst.

13. Verfahren nach einem der Ansprüche 1 bis 12, **dadurch gekennzeichnet, dass** das Hybridmaterial, bezogen auf das Gesamttrockengewicht, 0 bis 5 Gew.-% eines thermischen und/oder photochemischen Polymerisations- oder Vernetzungsinitiators umfasst.

14. Verfahren nach einem der Ansprüche 1 bis 13, **dadurch gekennzeichnet, dass** die mustermäßige Bestrahlung in Schritt c) bei einer erhöhten Temperatur von 30 bis 90 °C, bevorzugt 50 bis 70°C durchgeführt wird.

15. Verfahren nach einem der Ansprüche 1 bis 14, **dadurch gekennzeichnet, dass** das Hybridmaterial auf eine transparente Kunststofffolie aufgetragen wird und gegebenenfalls eine transparente Abdeckfolie auf die gegebenenfalls getrocknete Hybridschicht auflaminiert wird.

16. Verfahren nach einem der Ansprüche 1 bis 15, **dadurch gekennzeichnet, dass** die mustermäßige Bestrahlung mittels Holografie, Lithografie oder lokaler Bestrahlung durchgeführt wird.

17. Verfahren nach einem der Ansprüche 1 bis 16, **dadurch gekennzeichnet, dass** in der Hybridschicht ein Brechzahlgradient senkrecht zur Bestrahlungsrichtung erzeugt wird.

18. Verfahren nach einem der Ansprüche 1 bis 17, **dadurch gekennzeichnet, dass** in dem anorganisch-organischen Hybridmaterial durch lokale Bestrahlung ein Brechwertgradient senkrecht zur Bestrahlungsrichtung mit hoher lateraler Auflösung erzeugt wird.

19. Verfahren nach einem der Ansprüche 1 bis 18, **dadurch gekennzeichnet, dass** das die erhaltene Hybridschicht von dem Substrat delaminiert wird, um die Hybridschicht als Folie oder Platte zu erhalten.

20. Optisches Bauteil, erhältlich nach einem Verfahren der Ansprüche 1 bis 19.

21. Optisches Bauteil nach Anspruch 20, **dadurch gekennzeichnet, dass** es ein beschichtetes Substrat oder ein Formteil, insbesondere eine Folie ist.

22. Optisches Bauteil nach Anspruch 20 oder Anspruch 21, **dadurch gekennzeichnet, dass** es eine transparente oder transluzente Hybridschicht mit Brechzahlgradienten aufweist.

23. Optisches Bauteil nach einem der Ansprüche 20 bis 22, **dadurch gekennzeichnet, dass** es sich um eine Brechzahlgradientenfolie handelt.

24. Optisches Bauteil nach Anspruch 23, **dadurch gekennzeichnet, dass** die Brechzahlgradientenfolie eine oder mehrere transparente Kunststofffolien, die mit einem Hybridmaterial beschichtet sind, in welchem ein Brechzahlgradient vorliegt, umfasst oder im wesentlichen daraus besteht.

25. Verwendung eines optischen Bauteils nach einem der Ansprüche 20 bis 24 in bildgebenden optischen Elementen, für lichtlenkende optische Bauteile oder für die holografische Datenspeicherung.

## Claims

1. A method of producing an optical component, **characterized in that**
a) an inorganic-organic hybrid material comprising a) a soluble organic polymer and b) a mono- or polynuclear metal complex having at least one ligand having at least one photochemically or thermally polymerizable functional group is applied to a substrate or placed into or onto a mould,
b) the hybrid material is dried so that it becomes solid or viscous,
c) the solid or viscous hybrid material is heated or irradiated patternwise in order to produce a refractive index gradient in the hybrid material, and
d) the hybrid material is fully cured thermally and/or photochemically, the refractive index gradient becoming fixed.

2. The method according to claim 1, wherein the inorganic-organic hybrid material comprises at least one component selected from solvents, organic monomers or oligomers, plasticizers and other additives.

3. The method according to claim 1 or claim 2, **characterized in that** the inorganic-organic hybrid material comprises, based on the total dry weight,
a) 4.9% to 95.9% by weight of a soluble organic polymer,
b) 0.5% to 50% by weight of a mono- or polynuclear metal complex having at least one ligand having at least one photochemically or thermally polymerizable functional group,
c) 0 to 50% by weight of a plasticizer,
d) 0 to 5% by weight of an additive selected from thermal or photochemical polymerization or crosslinking initiators, sensitizers, wetting aids, adhesion promoters, antioxidants, flow control agents, stabilizers, coloring agents, photochromic and thermochromic compounds, and
e) 0 to 4.9% by weight of organic monomers and/or 0 to 50% by weight of organic oligomers.

4. The method according to any one of claims 1 to 3, **characterized in that** the inorganic-organic hybrid material is solid or viscous.

5. The method according to any one of claims 3 and 4, **characterized in that** component e) is an acrylate, preferably a methyl methacrylate, diol diacrylate or diol dimethacrylate, and/or an oligomer thereof.

6. The method according to any one of claims 1 to 5, **characterized in that** the soluble polymer is a polyacrylate, polymethacrylate, polyepoxide, polyvinyl alcohol, polyvinyl acetate, polyvinyl butyral or polyacrylamide.

7. The method according to any one of claims 1 to 6, **characterized in that** the mono- or polynuclear metal complex has at least one alkoxide group on the central metal atom or atoms.

8. The method according to any one of claims 1 to 7, **characterized in that** the ligand having at least one photochemically or thermally polymerizable functional group of the mono- or polynuclear metal complex is selected from carboxylic acids, β-diketones, CH-acidic compounds, chelate ligands, amino acids, peptides and proteins or corresponding bases thereof, each of which contain at least one photochemically or thermally polymerizable group.

9. The method according to any one of claims 1 to 8, **characterized in that** the photochemically or thermally polymerizable functional group is a C=C double bond, hydroxyl, epoxy or amino.

10. The method according to any one of claims 1 to 9, **characterized in that** the hybrid material comprises, based on the total dry weight, 10% to 80% by weight, preferably 20% to 40% by weight, of soluble polymer.

11. The method according to any one of claims 1 to 10, **characterized in that** the ligand contains at least one photochemically polymerizable functional group.

12. The method according to any one of claims 1 to 11, **characterized in that** the hybrid material comprises, based on the total dry weight, 0.1 % to 30% by weight and preferably 1% to 20% by weight of a plasticizer.

13. The method according to any one of claims 1 to 12, **characterized in that** the hybrid material comprises, based on the total dry weight, 0 to 5% by weight of a thermal and/or photochemical polymerization or crosslinking initiator.

14. The method according to any one of claims 1 to 13, **characterized in that** the patternwise irradiation in step c) is carried out at an elevated temperature of 30 to 90°C, preferably 50 to 70°C.

15. The method according to any one of claims 1 to 14, **characterized in that** the hybrid material is applied to a transparent polymeric film and if desired a transparent liner film is laminated onto the hybrid layer which is optionally dried.

16. The method according to any one of claims 1 to 15, **characterized in that** the patternwise irradiation is carried out by means of holography, lithography or local irradiation.

17. The method according to any one of claims 1 to 16, **characterized in that** in the hybrid layer a refractive index gradient is produced perpendicularly to the direction of irradiation.

18. The method according to any one of claims 1 to 17, **characterized in that** in the inorganic-organic hybrid material a refractive index gradient perpendicularly to the direction of irradiation with a high lateral resolution is produced by local irradiation.

19. The method according to any one of claims 1 to 18, **characterized in that** the resultant hybrid layer is delaminated from the substrate to give the hybrid layer in the form of a film or sheet.

20. An optical component obtainable by a method of claims 1 to 19.

21. The optical component according to claim 20, **characterized in that** it is a coated substrate or a moulding, in particular a film.

22. The optical component according to claim 20 or claim 21, **characterized in that** it has a transparent or translucent hybrid layer with refractive index gradient.

23. The optical component according to any one of claims 20 to 22, **characterized in that** it is a refractive index gradient film.

24. Optical component according to claim 23, **characterized in that** the refractive index gradient film comprises or substantially consists of one or more transparent polymeric films coated with a hybrid material in which there is a refractive index gradient.

25. Use of an optical component according to any one of claims 20 to 24 in imaging optical elements, for light-guiding optical components or for holographic data storage.

## Revendications

1. Procédé de production d'un composant optique, **caractérisé en ce que** :
a) une matière hybride inorganique - organique, renfermant a) un polymère organique soluble et b) un complexe métallique mono- ou polynucléaire, qui présente au moins un ligand ayant au moins un groupe fonctionnel polymérisable photochimiquement ou thermiquement, est déposée sur un substrat ou est placée dans ou sur un outil de formage,
b) la matière hybride est séchée afin de devenir solide ou visqueuse,
c) la matière hybride solide ou visqueuse est irradiée ou chauffée selon un motif, pour produire un gradient d'indices de réfraction dans la matière hybride, et
d) la matière hybride est complètement durcie thermiquement et/ou photochimiquement en fixant le gradient d'indices de réfraction.

2. Procédé selon la revendication 1, dans lequel la matière hybride inorganique - organique comprend au moins un composant choisi parmi les solvants, les monomères ou oligomères organiques, les plastifiants et autres additifs.

3. Procédé selon la revendication 1 ou la revendication 2, **caractérisé en ce que** la matière hybride inorganique - organique comprend, par rapport au poids sec total,
a) 4,9 à 95,9 % en poids d'un polymère soluble organique,
b) 0,5 à 50 % en poids d'un complexe métallique mono- ou polynucléaire, qui comprend au moins un ligand ayant au moins un groupe fonctionnel polymérisable photochimiquement ou thermiquement,
c) 0 à 50 % en poids d'un plastifiant,
d) 0 à 5 % en poids d'un additif choisi parmi les initiateurs de polymérisation ou de réticulation thermiques ou photochimiques, les agents sensibilisants, les auxiliaires de réticulation, les auxiliaires d'adhésion, les agents antioxydants, les agents d'écoulement, les stabilisants, les colorants, les composés photochromes et thermochromes et
e) 0 à 4,9 % en poids de monomères organiques et/ou 0 à 50 % en poids d'oligomères organiques.

4. Procédé selon l'une des revendications 1 à 3, **caractérisé en ce que** la matière hybride inorganique-organique est solide ou visqueuse.

5. Procédé selon l'une des revendications 3 et 4, **caractérisé en ce que** le composant e) est un acrylate, de préférence un méthacrylate de méthyle, un diacrylate de diol ou un diméthacrylate de diol, et/ou un oligomère de ceux-ci.

6. Procédé selon l'une des revendications 1 à 5, **caractérisé en ce que** le polymère soluble est un polyacrylate, un polyméthacrylate, un polyépoxyde, un alcool de polyvinyle, un acétate de polyvinyle, un butyral de polyvinyle ou un polyacrylamide.

7. Procédé selon l'une des revendications 1 à 6, **caractérisé en ce que** le complexe métallique mono- ou polynucléaire présente au moins un groupe alcoxyde sur le ou les atomes centraux métalliques.

8. Procédé selon l'une des revendications 1 à 7, **caractérisé en ce que** le ligand ayant au moins un groupe fonctionnel, polymérisable photochimiquement ou thermiquement, du complexe métallique mono- ou polynucléaire est choisi parmi les acides carboxyliques, les β-dicétones, les composés CH-acides, les ligands de chélates, les acides aminés, les peptides et les protéines ou les bases correspondantes de ceux-ci, qui comprennent respectivement au moins un groupe polymérisable photochimiquement ou thermiquement.

9. Procédé selon l'une des revendications 1 à 8, **caractérisé en ce que** le groupe fonctionnel polymérisable photochimiquement ou thermiquement est une double liaison C=C, un groupement hydroxy, époxy ou amino.

10. Procédé selon l'une des revendications 1 à 9, **caractérisé en ce que** la matière hybride, par rapport au poids sec total, comprend 10 à 80 % en poids, de préférence 20 à 40 % en poids de polymère soluble.

11. Procédé selon l'une des revendications 1 à 10, **caractérisé en ce que** le ligand présente au moins un groupe fonctionnel polymérisable photochimiquement.

12. Procédé selon l'une des revendications 1 à 11, **caractérisé en ce que** la matière hybride, par rapport au poids sec total, comprend 0,1 à 30 % en poids et de préférence 1 à 20 % en poids d'un plastifiant.

13. Procédé selon l'une des revendications 1 à 12, **caractérisé en ce que** la matière hybride, par rapport au poids sec total, comprend 0 à 5 % en poids d'un initiateur de polymérisation ou de réticulation thermique et/ou photochimique.

14. Procédé selon l'une des revendications 1 à 13, **caractérisé en ce que** l'irradiation selon un motif à l'étape c) s'effectue à une température élevée de 30 à 90°C, de préférence de 50 à 70°C.

15. Procédé selon l'une des revendications 1 à 14, **caractérisé en ce que** la matière hybride est déposée sur une feuille en matière plastique transparente et **en ce que**, le cas échéant, une feuille de recouvrement transparente est stratifiée sur la couche hybride, le cas échéant séchée.

16. Procédé selon l'une des revendications 1 à 15, **caractérisé en ce que** l'irradiation selon un motif s'effectue au moyen de l'holographie, de la lithographie ou de l'irradiation locale.

17. Procédé selon l'une des revendications 1 à 16, **caractérisé en ce qu'**un gradient d'indices de réfraction est produit dans la couche hybride perpendiculairement au sens de l'irradiation.

18. Procédé selon l'une des revendications 1 à 17, **caractérisé en ce qu'**un gradient d'indices de réfraction est produit dans la matière hybride inorganique - organique par irradiation locale perpendiculairement au sens d'irradiation avec une résolution latérale élevée.

19. Procédé selon l'une des revendications 1 à 18, **caractérisé en ce que** la couche hybride obtenue est déstratifiée du substrat pour obtenir la couche hybride sous forme de feuille ou de plaque.

20. Composant optique pouvant être obtenu selon un procédé des revendications 1 à 19.

21. Composant optique selon la revendication 20, **caractérisé en ce que** c'est un substrat revêtu ou une pièce moulée, en particulier une feuille.

22. Composant optique selon la revendication 20 ou la revendication 21, **caractérisé en ce qu'**il présente une couche hybride transparente ou translucide avec des gradients d'indices de réfraction.

23. Composant optique selon les revendications 20 à 22, **caractérisé en ce qu'**il s'agit d'une feuille à gradients d'indices de réfraction.

24. Composant optique selon la revendication 23, **caractérisé en ce que** la feuille à gradients d'indices de réfraction comprend ou se compose essentiellement d'une ou de plusieurs feuilles en matière plastique transparentes, qui sont revêtues d'une matière hybride qui présente un gradient d'indices de réfraction.

25. Utilisation d'un composant optique selon l'une des revendications 20 à 24 dans des éléments optiques donnant une image, pour des composants optiques déviant la lumière ou pour le stockage de données holographiques.
